# EUROPEAN PATENT APPLICATION

(11) **EP 4 086 587 A1**
(43) Date of publication of application: **09.11.2022**
(21) Application number: 21382402.2
(22) Date of filing: 04.05.2021
(51) Int. Cl.: G01D 5/353

(54) **COUPLED-CORE OPTICAL FIBER WITH FIBER BRAGG GRATING AND SENSING DEVICE**

(71) Applicant: Universidad Del Pais Vasco Euskal Herriko Unibertsitatea, 48940 Leioa (Vizcaya) (ES); Universitat Politècnica de València, 46022 Valencia (ES)
(72) Inventor: Villatoro Bernardo, Agustín Joel, 48940 Vizcaya (ES); Sales Maicas, Salvador, 46022 Valencia (ES); Madrigal Madrigal, Javier, 46022 Valencia (ES)
(74) Representative: Balder IP Law, S.L.

(57) **Abstract**

An optical fiber comprising: a first optical fiber and a second optical fiber; the first optical fiber comprising a core extending between ends of the first optical fiber, and being a single mode fiber; the second optical fiber comprising a first core extending between first and second ends of the second optical fiber, and a second core extending between the first and second ends; the second core being apart from the first core such that there is optical coupling between the first and second cores; the second optical fiber being connected to the first optical fiber at the first end such that the first core is connected with the core of the first optical fiber and the second core not being connected with any core of the first optical fiber; the first core is at a central axis of the second optical fiber, i.e. the central axis of the first core coincides with the central axis of the second optical fiber; and the first and second cores each comprising a fiber Bragg grating having a same reflection wavelength, the two fiber Bragg gratings extending a same length and being positioned at a same distance from the first end.

## Description

### TECHNICAL FIELD

The present disclosure relates to the field of optical fibers. More particularly, the present disclosure relates to optical fibers having fiber Bragg gratings, sensing devices using the same, and methods for providing and using said fibers and devices.

### STATE OF THE ART

Sensors based on fiber Bragg gratings (FBGs) are widely used in different technical fields and sectors. The FBG technology is well established, mature and commercially available.

An FBG reflects a narrow peak centered in the so-called Bragg wavelength (λ_{B}). The position of λ_{B} changes when the FBG is subjected to strain, or to any phenomenon that can be converted to strain, as for example, pressure, force, vibrations, etc. The position of λ_{B} also changes with temperature.

In a sensor based on FBG, the position of λ_{B} is monitored and correlated with the measurand. To do so, a broadband light source and a high-resolution spectrometer or a tunable laser and a suitable photodetector are necessary. These interrogation systems are in general costly. Consequently, a sensor based on FBG tends to be expensive.

As FBGs are sensitive to temperature, a mechanism to compensate the effect of temperature or a reference temperature sensor is necessary when FBGs are used as sensors.

In patent document US-7512291-B2, changes in the position of λ_{B} can be converted to intensity changes by means of edge filters, interferometers or similar devices placed before a photodetector. However, the linear section of wavelength filters is limited, thus not any FBGs can be interrogated with filters.

In S. S. Yakushin et al., "A study of bending effect on the femtosecond-pulse inscribed fiber Bragg gratings in a dual-core fiber," Optical Fiber Technology 43 (2018) 101-105, FBGs can be inscribed in a polarization-maintaining dual core fiber. Each individual core and, thus, each individual FBG is interrogated.

FBGs can also be inscribed in a multicore fiber (MCF); this means an optical fiber with multiple cores in a common cladding. In these fibers, expensive fan-in/out devices are required to retrieve the information of each core or grating.

### DESCRIPTION OF THE INVENTION

A first aspect of the disclosure relates to an optical fiber comprising: a first optical fiber and a second optical fiber; the first optical fiber comprising a core extending between ends of the first optical fiber, and being a single mode fiber (SMF); the second optical fiber comprising a first core extending between first and second ends of the second optical fiber, and a second core extending between the first and second ends; the second core being apart from the first core such that there is optical coupling between the first and second cores; the second optical fiber being connected to the first optical fiber at the first end such that the first core is connected with the core of the first optical fiber and the second core not being connected with any core of the first optical fiber; the first core is at a central axis of the second optical fiber, i.e. the central axis of the first core coincides with the central axis of the second optical fiber; and the first and second cores each comprising a fiber Bragg grating having a same reflection wavelength, the two fiber Bragg gratings extending a same length and being positioned at a same distance from the first end.

The optical fiber, which includes the first and second optical fibers, enables the interrogation of the two FBGs in a cost-effective manner. To this end, the second optical fiber is arranged as two coupled core fiber, i.e. TCCF, whereby light can be coupled from one core to the other. Additionally, the two FBGs share the reflection wavelength, this means that the FBGs are equal and can potentially be inscribed at once in the form of a single FBG that is produced in the two cores of the second optical fiber.

The interrogation is conducted by way of excitation of the fundamental mode of the first optical fiber, which is an SMF, with a light source that, in some embodiments, is also comprised in the optical fiber. The light in the first optical fiber propagates and both gets into the first core of the second optical fiber and couples into the second core of the second optical fiber. Accordingly, the light propagates in the first and second cores thereby interrogating the FBGs.

Further, owing to the arrangement of the optical fiber, the same can be used as a sensing device. Particularly, with the optical fiber it is possible to measure forces applied thereto, pressures applied thereto, strains that the optical fiber is subjected to, and/or temperature.

The capacity of the optical fiber to be used as a sensing device is because intensity of the light reflected from the FBGs varies depending on how at least the second optical fiber bends in terms of both bending direction and bending degree, namely, how much it has been bent. Measurement of changes in light intensity is faster than the measurement of changes in wavelength of the peak reflected.

Besides, the wavelength(s) reflected by the FBGs depends upon the temperature of the second optical fiber. Therefore, by detecting the light reflected, one or more of the physical magnitudes can be determined based on the aforesaid parameters.

In some embodiments, the second optical fiber is not coupled with any optical fiber at the second end.

The second end may remain free from connections to other optical fibers so that it may be used for measurement of forces, pressures and/or strains when the second optical fiber is bent.

In some embodiments, the first and second cores are parallel to each other.

In this way, the determination of the physical magnitudes when the optical fiber is used as sensing device is more accurate since the changes in the measured light are better characterized.

In some embodiments, the first core and the core of the first optical fiber are parallel to each other.

In this way, the coupling of light from the first optical fiber to the second optical fiber for interrogation of the FBGs is maximal.

In some embodiments, a distance from a central axis of the second core to a central axis of the first core is equal to or less than 15 µm and is equal to or greater than 10 µm.

The optical coupling of the two cores is enhanced in this manner, thereby improving the measurements obtained from the peaks reflected by the FBGs.

In some embodiments, the first and second cores are equal.

In this way, the determination of the physical magnitudes when the optical fiber is used as sensing device is more accurate since the changes in the measured light are better characterized.

In some embodiments, the core of the first optical fiber is at a central axis of the first optical fiber, i.e. the central axis of the core coincides with the central axis of the first optical fiber.

The arrangement of cores at the central axes of the respective optical fibers further eases the manufacturing of the optical fiber since the first and second optical fibers thereof can be spliced together with splicing machines known in the art and they may even be spliced together in an automated manner.

Also, in this way, the coupling of light from the first optical fiber to the second optical fiber for interrogation of the FBGs is maximal.

In some embodiments, the optical fiber further comprises a photodetector.

The light resulting from the interrogation of the FBGs can be detected with the photodetector, in this way the measurement of the light intensity thereof can be used for determination of one or more of the physical magnitudes described above.

Furthermore, changes in temperature do not alter the light intensity of the reflected peaks, hence the optical fiber preferably does not comprise any temperature compensation mechanism or a temperature sensor for reference temperature measurements.

In some embodiments, the optical fiber comprises an optical spectrometer or an optical spectrum analyzer. In some other embodiments, the optical fiber does not comprise any one of: an optical spectrometer, and an optical spectrum analyzer.

The use of a spectrometer or an optical spectrum analyzer is preferably reduced to the embodiments in which the optical fiber is to be used for temperature sensing. When this is not the case, the optical fiber preferably does not comprise such devices so that can be simpler and produced at a lower cost than other optical fiber comprising an optical spectrometer and/or an optical spectrum analyzer; the optical fiber may optionally include a photodetector instead.

In some embodiments, the optical fiber further comprises a light source coupled such that light reflected by the fiber Bragg gratings arrives at a light receiver, e.g. a photodetector, an optical spectrometer, etc.

In some embodiments, the optical fiber does not comprise any one of a light polarizing device, e.g. a polarizer, and a polarization-maintaining device, e.g. the first optical fiber is not a single mode polarization-maintaining fiber but rather a conventional single mode fiber.

Polarization of the light does not have to be maintained in the optical fiber, thereby making the optical fiber simpler and/or more cost-effective.

In some embodiments, the first optical fiber comprises a single core (the core) and the second optical fiber comprises two single cores (the first and second cores).

In some embodiments, each core of the second optical fiber comprises a single fiber Bragg grating.

A second aspect of the disclosure relates to a sensor for measuring at least one of force, pressure, strain and temperature, the sensor comprising the optical fiber of the first aspect of the disclosure.

A third aspect of the disclosure relates to a method comprising: arranging a first optical fiber comprising a core extending between ends of the first optical fiber, and being a single mode fiber; arranging a second optical fiber comprising a first core extending between first and second ends of the second optical fiber, and a second core extending between the first and second ends; splicing the second optical fiber to the first optical fiber at the first end such that the first core is connected with the core of the first optical fiber, thereby providing a continuous optical fiber. Further, the second core is apart from the first core such that there is optical coupling between the first and second cores; the second core is not connected with any core of the first optical fiber; the first core is at a central axis of the first optical fiber; and the first and second cores each comprise a fiber Bragg grating having a same reflection wavelength, the two fiber Bragg gratings extending a same length and being positioned at a same distance from the first end.

The method enables the provision of a cost-effective continuous optical fiber that incorporates two FBGs that can be interrogated through an SMF with a single light source. The peaks reflected by the FBGs can be used for sensing purposes.

Moreover, the optical fiber provided in this manner does not require fan-in and/or fan-out devices for the interrogation of and/or retrieval of information from the FBGs.

In some embodiments, the method further comprises inscribing the two fiber Bragg gratings in the first and second cores at a same time.

A single FBG may be inscribed to form the FBG in each of the first and second cores, thereby making the production of the optical fiber simpler, more cost-effective and less prone to manufacturing errors since the characteristics and positioning of only one FBG need to be controlled.

In some embodiments, the method further comprises exciting the first optical fiber with a fundamental mode thereof, thereby exciting modes in the first and second cores for interrogation of the respective fiber Bragg gratings. The light can be provided by a light source such as a superluminiscent diode (i.e. SLED) or a laser, including a tunable laser.

In some embodiments, the method further comprises detecting light reflected from the two fiber Bragg gratings with a photodetector, a spectrometer or an optical spectrum analyzer.

In some embodiments, the method further comprises, based on the detected light, determining at least one of: force or pressure at least applied to the second optical fiber; strain that at least the second optical fiber is subjected to; and temperature.

The light intensity of the reflected light varies depending on the aforesaid physical magnitudes. Hence, upon establishing the wavelength, one or more of said physical magnitudes can be determined.

In some embodiments, the method further comprises bending the second optical fiber, e.g. a portion thereof. In some of these embodiments, the second optical fiber is bent such that a portion thereof at least moves along a direction defined by a start point and an end point, the start point being an intersection of a central axis of the second core with the second end, and the end point being an intersection of a central axis of the first core with the second end.

Depending on the direction along which the optical fiber is bent, the light intensity of the light reflected by the FBGs changes more or less. For example, a considerable reduction in light intensity is measured when the optical fiber is bent such that the movement thereof at least has a component according to the direction defined by the start and end points. This can advantageously be used for measuring certain strains on the optical fiber.

In some embodiments, the continuous optical fiber is the optical fiber of the first aspect of the disclosure.

A fourth aspect of the present disclosure relates to the use of the optical fiber of the first aspect of the disclosure in a sensor for measuring at least one of force, pressure, strain and temperature.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 diagrammatically shows an optical fiber in accordance with embodiments.
Figure 2 shows a cross-section of an optical fiber in accordance with embodiments.
Figures 3 and 4 show light reflected by FBGs in optical fibers in accordance with embodiments.
Figure 5 shows change in light intensity of the light reflected versus bending in optical fibers in accordance with embodiments.
Figure 6 shows variation of the light reflected with temperature in optical fibers in accordance with embodiments.
Figures 7A and 7B respectively show detected voltage as a function of time when a TCCF oscillates between the directions of Figures 3 and 4, and a Fast Fourier Transform, FFT, of the detected voltage.
Figure 8 diagrammatically shows a sensor in accordance with embodiments.

### DESCRIPTION OF WAYS OF CARRYING OUT THE INVENTION

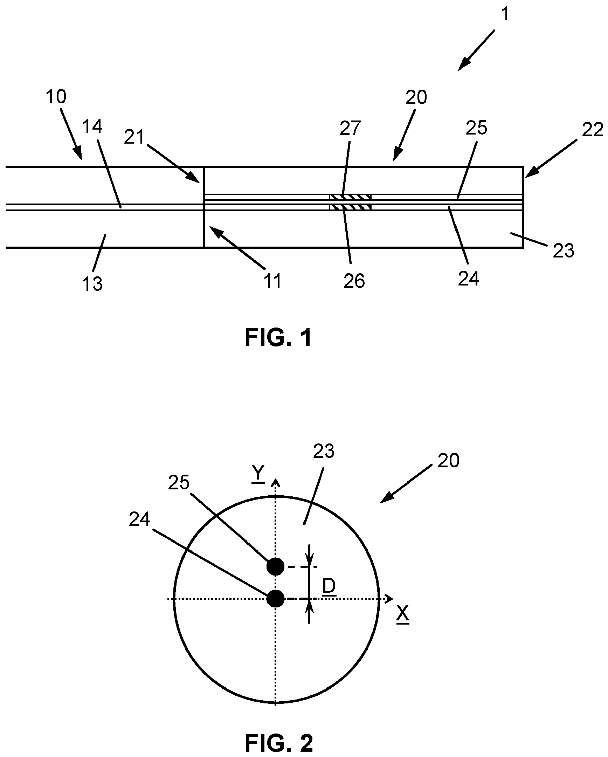

Figure 1 diagrammatically shows an optical fiber 1 in accordance with embodiments.

The optical fiber 1 is a continuous optical fiber resulting from the connection, preferably by way of splicing, of a first optical fiber 10 and a second optical fiber 20. In this sense, the second optical fiber 20 is connected at a first end 21 thereof with an end 11 of the first optical fiber 10.

The first optical fiber 10 is an SMF comprising a single core 14 within a cladding 13. The second optical fiber 20 is a TCCF, and comprises a first core 24 and a second core 25 within a cladding 23. In some preferred embodiments, the first and second cores 24, 25 are equal, namely they have the same structural features and characteristics, i.e. the cores 24, 25 are identical aside from manufacturing tolerances.

Each of the first and second cores 24, 25 comprises a respective fiber Bragg grating 26, 27. The two FBGs 26, 27 are arranged at a same distance from the first end 21, and also from the second end 22, which is not necessarily flat, since the two FBGs 26, 27 feature a same length in the respective cores 24, 25.

As it can be seen, the core 14 of the first optical fiber 10 is connected to the first core 24 of the second optical fiber 20, whereas the second core 25 is not connected to any core of the first optical fiber 10. Notwithstanding, the separation between the first and second cores 24, 25 is such that there is optical coupling between the two cores 24, 25.

The first core 24 is centrally arranged in the second optical fiber 20, i.e. a central axis of the first core 24 coincides with a central axis of the second optical fiber 20 (as seen in Figure 2 as well). The first and second cores 24, 25 are preferably parallel to each other. The core 14 of the first core 24 is preferably parallel to the core 14 of the first optical fiber 10, which is preferably also centrally arranged in the first optical fiber 10.

Figure 2 shows a cross-section of an optical fiber in accordance with embodiments. With reference to the description of the embodiments of Figure 1, the cross-section represented corresponds to the second optical fiber 20, that is, the TCCF. A first core 24 that is to be connected to the core of an SMF is preferably at a geometric center of the cross-section and the center of the second core 25 is separated from the center of the first core 24 by a distance D.

In some embodiments, the first and second cores 24, 25 have a diameter between 6 and 10 µm, preferably between 7 and 9 µm, and more preferably is 8 µm. In these embodiments, the distance D is between 12 and 18 µm, preferably between 13,5 and 16,5 µm, and more preferably is 15 µm. The endpoints of the ranges are also part of said ranges.

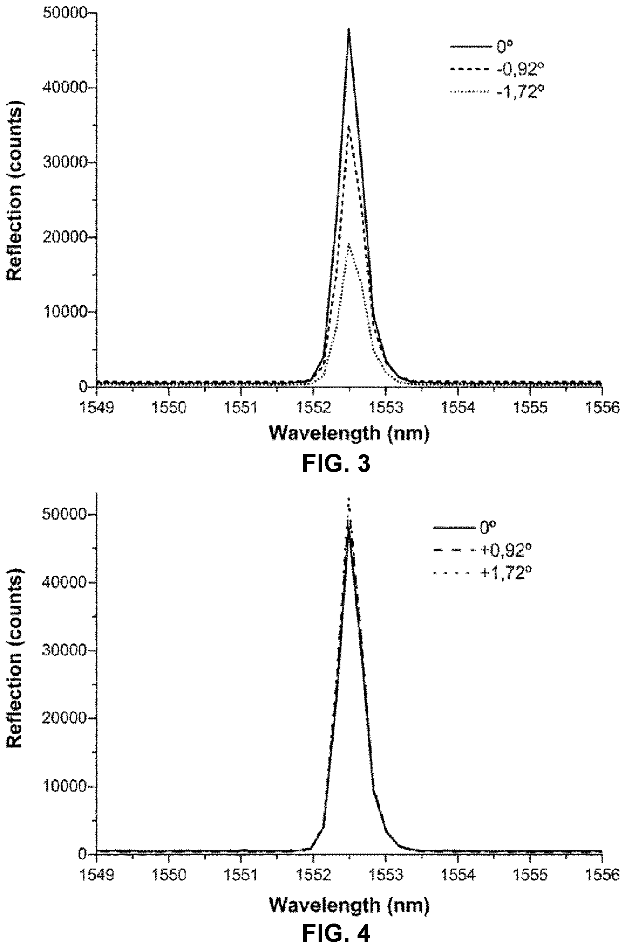

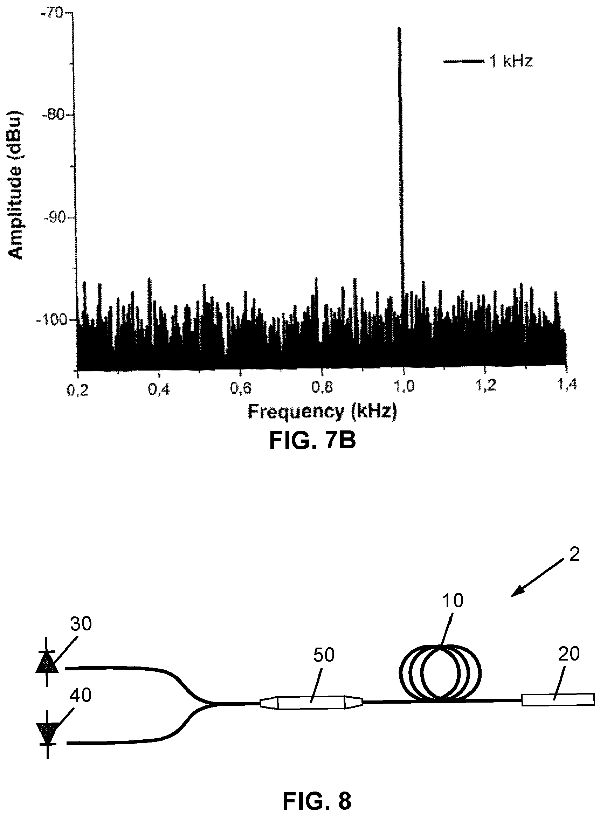

In Figure 3 there is shown the light that is reflected by FBGs when the optical fiber comprising them is bent in a certain manner. The FBGs in this example and in the next examples has a reflection wavelength of 1552,5 nm, but it will be noted that FBGs with other Bragg wavelengths are possible too without departing from the scope of the present disclosure. In this sense, in some embodiments, the optical fibers and the fiber Bragg gratings have a wavelength of operation in the range of 1260 nm to 1625 nm, preferably between 1500 nm and 1600 nm; in some other embodiments, the wavelength of operation is in the range of 780 to 970 nm, preferably between 800 nm and 900 nm. As it will be noted, other devices that are part of the optical fiber (or a sensor comprising the same) or are couplable thereto, such as a light source and/or a light receiver (as shown in the embodiment of Figure 8) also have a same wavelength of operation.

As it can be appreciated, there is a reduction in light intensity when the optical fiber is bent such that there is at least a negative vertical component when observed with reference to the cross-section shown in Figure 2. Taking Figure 2 into account, when a portion (namely a segment) of the optical fiber comprising the FBGs is moved towards the -Y (i.e. negative Y axis), the FBGs reflect less light: at 0° bending (that is to say, when there is no bending) the light intensity (solid line) is greater than the light intensity (dashed line) at -0,92° bending, and much greater than the light intensity (dotted line) at -1,72° bending.

In Figure 4 there is shown a graph similar to that in Figure 3 but when the bending of the optical fiber has at least a positive vertical component when observed with reference to the cross-section shown in Figure 2.

For same angle bending as in Figure 3 but in the opposite direction, the light intensity measured changes little in comparison with a fiber that is not bent; and the light intensity measured changes much less than the light intensity measured for a fiber bent as explained with reference to Figure 3.

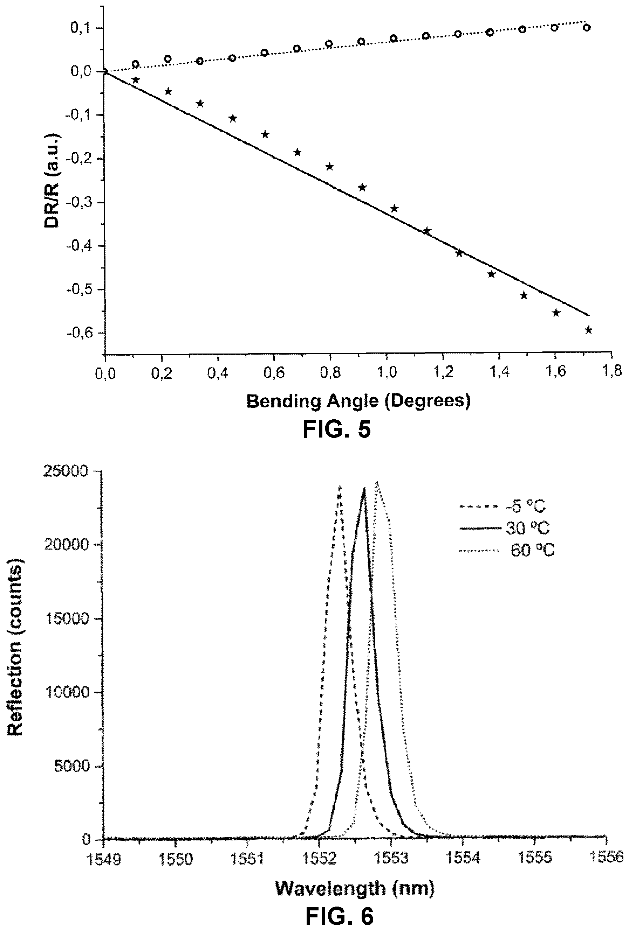

The variations in light intensity for the two different bending directions can be appreciated more easily in Figure 5.

Figure 5 shows change in light intensity of the light reflected versus bending in optical fibers in accordance with embodiments.

The bending angle is represented in the X axis and the variation in light intensity is represented in the Y axis. Markers have been illustrated in the graph to show actual measurements, and the lines are an approximated trend of the change in light intensity.

As it can be observed, the change in light intensity is equal to or below 0,1, i.e. 10%, for positive bending angles of up to 1,7°, whereas the change in light intensity is up to 0,6, i.e. 60%, for negative bending angles of up to (negative) 1,7°.

Figure 6 shows variation of the light reflected with temperature in optical fibers in accordance with embodiments.

The peak reflected by the FBGs has a different wavelength at different temperatures, thereby making possible to use the optical fiber for sensing temperature. For a temperature of 30°C, the reflected peak (solid line) is at a wavelength of 1552,6 nm; for a temperature of -5 °C, the reflected peak (dashed line) is at a wavelength of 1552,4 nm; and for a temperature of 60 °C, the reflected peak (dotted line) is at a wavelength of 1552,9 nm.

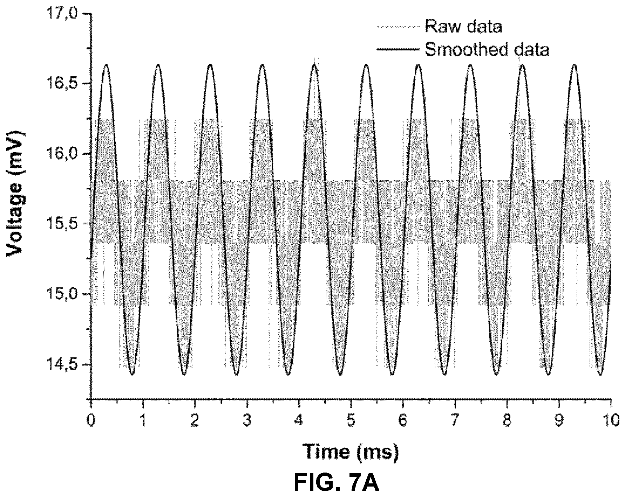

Figures 7A and 7B respectively show detected voltage as a function of time when a segment of a TCCF oscillates between the directions of Figures 3 and 4, and a Fast Fourier Transform, FFT, of the detected voltage.

The detected voltage results from measuring the light reflected by the FBGs when a segment of a TCCF (e.g. the second optical fiber 20 of Figures 1 and 2) oscillates along the Y direction represented in Figure 2. This means that a free end of said fiber goes between positive and negative bending angles back and forth. Such vibrating behavior of the fiber can be determined based on the detected voltage, or the FFT applied thereto, which shows a peak within the spectrum. In this example, the peak is at approximately 1 kHz. Accordingly, the TCCF with Bragg gratings inscribed in the cores thereof and the optical fiber comprising the TCCF can be used for measuring vibrations.

Figure 8 diagrammatically shows a sensor 2 in accordance with embodiments.

The sensor 2 comprises a light source 30 such as an SLED or a laser. The sensor 2 comprises a light receiver 40 such as a photodiode, an optical spectrometer, or an optical spectrum analyzer. The sensor 2 comprises a fiber optic circulator or coupler 50 connected with both the light source 30 and the light receiver 40, and also connected with the single mode fiber 10 coupled with the TCCF 20.

In this text, the terms first, second, third, etc. have been used herein to describe several devices, elements or parameters, it will be understood that the devices, elements or parameters should not be limited by these terms since the terms are only used to distinguish one device, element or parameter from another. For example, the first optical fiber could as well be named second optical fiber, and the second optical fiber could be named first optical fiber without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An optical fiber (1) comprising: a first optical fiber (10) and a second optical fiber (20); the first optical fiber (10) comprising a core (14) extending between ends of the first optical fiber (10), and being a single mode fiber; the second optical fiber (20) comprising first and second cores (24,25) each extending between first and second ends (21,22) of the second optical fiber (20); the second optical fiber (20) being connected to the first optical fiber (10) at the first end (21) such that the first core (24) is connected with the core (14) of the first optical fiber (10); the second core (25) being apart from the first core (24) such that there is optical coupling between the first and second cores (24,25); **characterized in that:** the first core (24) is at a central axis of the second optical fiber (20); the second core (25) not being connected with any core (14) of the first optical fiber (10); and the first and second cores (24,25) each comprising a fiber Bragg grating (26,27) having a same reflection wavelength, and the two fiber Bragg gratings (26,27) extending a same length and being positioned at a same distance from the first end (21).

2. The optical fiber (1) of claim 1, wherein the second optical fiber (20) is not coupled with any optical fiber at the second end (22).

3. The optical fiber (1) of any one of the preceding claims, wherein the first and second cores (24,25) are parallel to each other, and a distance from a central axis of the second core (25) to a central axis of the first core (24) is equal to or less than 15 µm and is equal to or greater than 10 µm.

4. The optical fiber (1) of any one of the preceding claims, wherein the first and second cores (24,25) are equal.

5. The optical fiber (1) of any one of the preceding claims, wherein the core (14) of the first optical fiber (10) is at a central axis of the first optical fiber.

6. The optical fiber (1) of any one of the preceding claims, further comprising one of: a photodetector, an optical spectrometer, and an optical spectrum analyzer.

7. The optical fiber (1) of any one of the preceding claims, wherein the optical fiber (1) does not comprise any one of: an optical spectrometer, and an optical spectrum analyzer.

8. A sensor (2) for measuring at least one of force, pressure, strain and temperature, the sensor comprising the optical fiber (1) of any one of claims 1-6.

9. A method comprising: arranging a first optical fiber (10) comprising a core (14) extending between ends of the first optical fiber (10), and being a single mode fiber; arranging a second optical fiber (20) comprising first and second cores (24,25) each extending between first and second ends (21,22) of the second optical fiber (20); splicing the second optical fiber (20) to the first optical fiber (10) at the first end such that the first core (24) is connected with the core (14) of the first optical fiber (10), thereby providing a continuous optical fiber (1); the second core (25) being apart from the first core (24) such that there is optical coupling between the first and second cores (24,25); **characterized in that:** the first core (24) is at a central axis of the first optical fiber (10); the second core (25) not being connected with any core (14) of the first optical fiber (10); and the first and second cores (24,25) each comprising a fiber Bragg grating (26,27) having a same reflection wavelength, and the two fiber Bragg gratings (26,27) extending a same length and being positioned at a same distance from the first end (21).

10. The method of claim 9, further comprising: inscribing the two fiber Bragg gratings (26,27) in the first and second cores (24,25) at a same time.

11. The method of any one of the preceding claims, further comprising exciting the first optical fiber (10) with a fundamental mode thereof, thereby exciting modes in the first and second cores (24,25) for interrogation of the respective fiber Bragg gratings (26,27).

12. The method of claim 11, further comprising detecting light reflected from the two fiber Bragg gratings (26,27) with one of: a photodetector, an optical spectrometer, and an optical spectrum analyzer.

13. The method of claim 12, further comprising, based on the detected light, determining at least one of: force or pressure at least applied to the second optical fiber (20); strain that at least the second optical fiber (20) is subjected to; and temperature.

14. The method of any one of the preceding claims, further comprising bending the second optical fiber (20).

15. The method of any one of the preceding claims, wherein the continuous optical fiber (1) is the optical fiber (1) of any one of claims 1-7.
